# EUROPEAN PATENT APPLICATION

(11) **EP 0 571 100 A1**
(43) Date of publication of application: **24.11.1993**
(21) Application number: 93303454.8
(22) Date of filing: 04.05.1993
(51) Int. Cl.: G01N 35/06, G01F 23/14

(54) **Pipette apparatus**

(30) Priority: 04.05.1992 FI 922002
(71) Applicant: WALLAC OY, SF-20101 Turku (FI)
(72) Inventor: Tolonen, Pertti, SF-20740 Turku (FI); Holmberg, Johna, SF-20760 Piispanristi (FI)
(74) Representative: Gallafent, Richard John

(57) **Abstract**

Method employed in a pipette apparatus (10) operating on the air-piston principle wherein operation is monitored and/or controlled on the basis of the air pressure measured by a pressure sensor (40) connected to the air space (60) of the pipette. The pressure sensor is connected to a cylindrical tube (12) of the pipette so that it measures the air pressure in the cylinder. A control unit (65) registers pressure changes in the air space of the pipette and functions as an alarm unit in case of a malfunction or controls the operation of the pipette on the basis of the changes in the air space of the pipette.

## Description

The invention relates to a method employed in a pipette apparatus operating on the air-piston principle wherein the liquid to be dispensed is not in contact with the piston of the pipette but the liquid to be dispensed is moved by an air space between the piston and the liquid.

Pipettes provided with air-pistons and changeable tips are used in laboratories for handling and dispensing liquids. Dispensing with a manually operated pipette is performed by moving the pipette piston manually. The tip is attached by pressing the cone at the end of the pipette inside the changeable tip into a cone of a corresponding size. The tip is detached, for example, by taking the pipette to a desired place and then pressing the eject button e.g. on the side of the pipette whereupon the tip loosens. This kind of solution is presented for example in the US patent 4,151,750.

In automatic pipettes liquid dispensing is usually performed by moving the pipette piston by a motor. In automatic pipettes, the changeable tip is attached to the pipette by fetching the tip from a place, which ic specifically designed for the tip. The tip is attached in the same way as in manual pipettes i.e. by pressing the cone of the pipette inside the tip into a corresponding cone.

The problem with automatic pipettes is the verification of the accuracy in liquid dispensing. One solution is presented in the patent US 4,399,711. A light sensor or a similar detector is connected to the tip for monitoring the degree of fullness of the tip among other things. However, information obtained from such a device is insufficient in that it does not send information on any other malfunctions which possibly take place. Such things to be monitored are:
- attachment of the tip and tightness of the attachment against the body of the pipette,
- assuring the degree of fullness of the tip,
- observation of the blocking of the tip in a pipette operating on the air-piston principle,
- observation of the liquid surface and
- determination of the need for replacement of the tip during the run

By using a light sensor in the pipette it has been possible to gain information about the behavior of the space between the light source and the light sensor. The object must be transparent which restricts use of such a sensor. In some cases, a light sensor can be replaced by a mechanical sensor, which, however, requires a contacting measurement. A solution which is based on electrical properties like electric conductivity, magnetic field or capacitance requires stable and disturbance-free circumstances.

The objective of this invention is to eliminate the above problem and to obtain a new operating mechanism of a pipette with no such drawbacks. The objective of this invention is also to obtain such an operating mechanism of a pipette which informs about several different malfunctions which may occur in pipetting. It also guarantees both correct dispensing and attachment and detachment of the tip, among other things.

The method of the invention is characterized in that pipette operations are monitored and/or controlled on the basis of the air pressure measured by a pressure sensor which is connected to the air space of the pipette.

The invention also relates to a pipette apparatus where the liquid to be pipetted is not in contact with the piston of the pipette but there is an air space between the liquid and the piston. The pipette apparatus according to the invention is characterized in that a pressure sensor is connected to the air space of the pipette.

It is possible to solve the above problems by a pressure transducer which is connected with the air space of the pipette body, the objects to be measured thereby being, among other things:
- testing the tightness of the pipette,
- testing the attachement and the tightness of the tip,
- testing the blocking of the tip
- testing the degree of fullness of the tip and
- observation of the liquid surface.

### FUNCTIONS OF THE PRESSURE SENSOR

A. Checkings before pipetting:
   Tightness of the body of the pipette
   Attachment of the detachable tip
   Tightness of the joint of the detachable tip
B. Things to be observed during pipetting operation:
   The tip meets the liquid surface, downward motion
   The tip meets the liquid surface, upward motion
   Degree of fullness of the tip
C. Malfunctions during pipetting operation:
   Sudden separation of the detachable tip from the liquid during a pipetting operation
   Blocking of the detachable tip

The various uses of the pressure sensor will be described in more detail in the following:

### A. THINGS TO CHECKED BEFORE PIPETTING

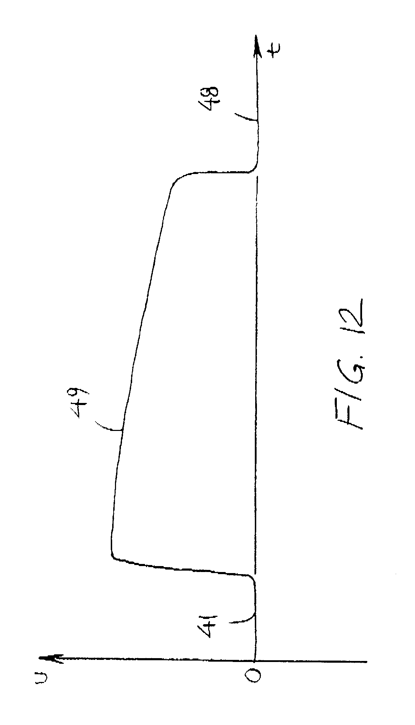

### A1. TIGHTNESS OF THE BODY OF THE PIPETTE (Figure 12)

Checking the tightness of the pipette body is an operation which can be done by the pressure sensor already before fetching the detachable tip. However, it can be done automatically at specific intervals during a pipetting operation. A pipette can start leaking because there are parts which are liable to wear. Such a part is, for example, the piston ring abutting the cylidrical tube.

Checking is performed while moving the cap of a reagent bottle. The joint between the conical part of the pipette and the cap of the bottle must be tight, If there are problems in the tightness of the pipette, the cause must be explored or the pipette must be replaced. When the piston is moved so that a vacuum is generated in the cylinder, it is possible to use the pressure sensor for measuring whether the vacuum remains unchanged.

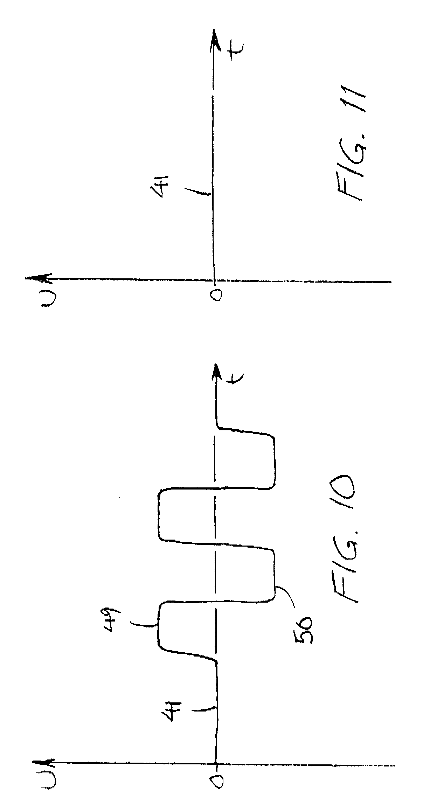

### A2. CHECKING THE TIGHTNESS OF THE ATTACHEMENT BETWEEN THE DETACHABLE TIP AND THE PIPETTE CONE (Figure 10 and 11)

### A2a. The detachable tip in place (Figure 10)

To check whether the detachable tip is in place, the piston of an empty pipette is moved to-and-fro. This has the effect that pressure in the cylinder changes. An upward motion of the piston creates vacuum in the cylinder and a downward motion of the piston creates overpressure in the cylinder, correspondingly. These changes in pressure are due to the fact that the cross-sectional area of the opening at the end of the tip is smaller than that of the rest of the tip and the piston. This forms a choke for the air that flows in and out at the end of the tip and this choke obstruction causes the change in pressure.

### A2b. The detachable tip not in place (Figure 11)

If the detachable tip is not in place, pressure within the air space of the pipette does not change although the piston is moved to-and-fro. This is because there is no such choking obstruction that would change the pressure.

### A3. TIGHTNESS OF THE JOINT OF THE DETACHABLE TIP (Figure 12), method 1

The detachable tip is pressed tightly against some base and changes in the vacuum, that was created by moving the piston, are followed. If the pressure remains constant, the joint of the detachable tip is tight.

### A4. TIGHTNESS OF THE JOINT OF THE DETACHABLE TIP (Figure 12), method 2

Tightness of the detachable tip can also be ascertained during pipetting by following the hydrostatic pressure that is effected by the liquid column at the end of the pipette tip. If the pressure remains constant the joint of the detachable tip is tight.

### B. OBSERVATIONS DURING MEASUREMENT:

### B1. THE TIP MEETS THE LIQUID SURFACE, motion downwards (Figure 15)

When the pipette tip moves toward the liquid surface and, at the same time, the piston of the pipette moves downwards, meeting between the pipette tip and the liquid surface exhibits as a sudden increase in pressure in the air space of the pipette.

### B2. THE TIP MEETS THE LIQUID SURFACE, motion downwards (Figure 10) method 2

Meeting between the pipette tip and the liquid surface can also be detected by means of the pressure in the air space of the pipette so that the piston is moved to-and-fro. Meeting of the liquid surface is then clearly detected beacause liquid flow through the opening of the tip causes a much larger pressure difference than air flow through the opening.

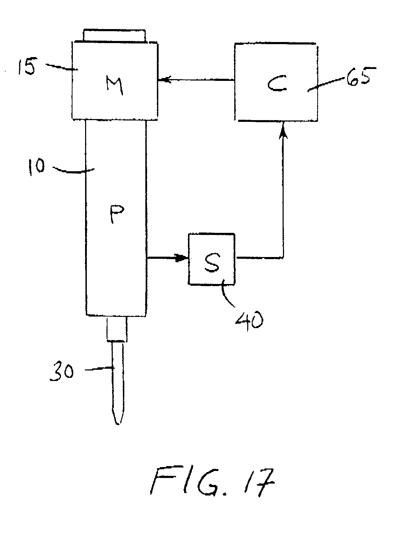

### B3. THE TIP MEETS THE LIQUID SURFACE, motion upwards (Figure 16)

Meeting between the pipette tip and the liquid surface during an upward motion of the piston is detected by a sudden vacuum.

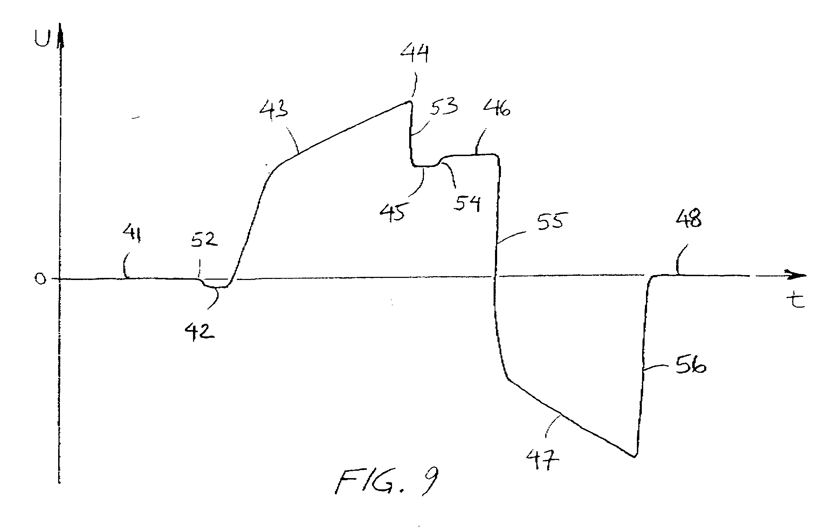

### B4. DEGREE OF FULLNESS OF THE PIPETTE (Figure 9)

When the piston of the pipette has stopped and the tip is above the liquid surface, pressure in the air space of the pipette corresponds to the hydrostatic pressure of the liquid column in the pipette. This allows a straightforward determination of the degree of fullness of the pipette.

### C. FAILURES

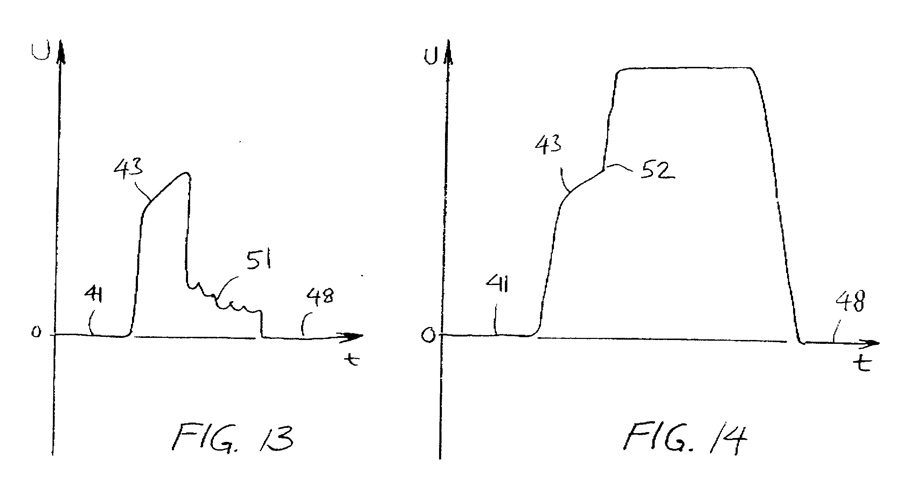

### C1. SUDDEN SEPARATION OF THE DETACHABLE TIP FROM THE LIQUID DURING A PIPETTING OPERATION (Figure 13)

When the detachable tip of the pipette separates from the liquid during pipetting, pressure suddenly changes in the air space of the pipette. Then the pipette seems to bubble because air flows into the tip during the suction stage. This phenomenom shows as an indefinite change in pressure.

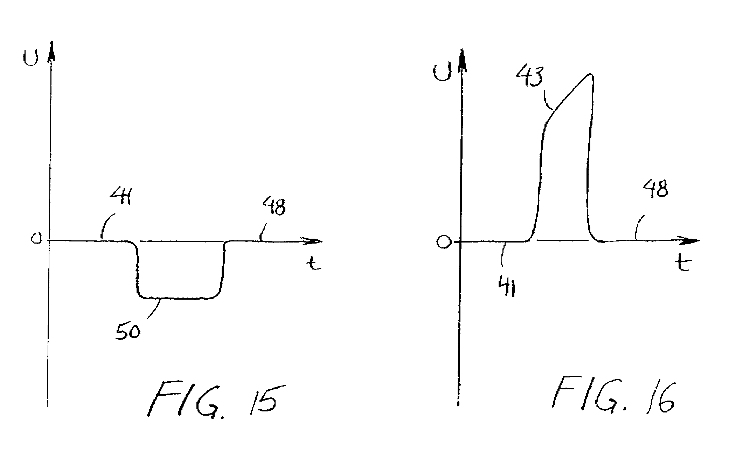

### C2. BLOCKING OF THE TIP (Figure 14)

Economical use of liquids is the goal in pipetting liquids. Therefore, the liquid in the container should be utilized as accurately as possible to minimize the amount of unused liquid remaining in the container. This requires that pipetting should be done as close to the bottom as possible. If the tip of the pipette touches the bottom, it may cause a partial or complete blocking of the opening of the tip. The disturbance due to blocking can be seen as a sudden increase in the pressure of the air space of the pipette.

The invention will be described in the following by means of examples and referring to the enclosed drawings in which
- Figure 1: shows a cross-sectional view of a pipette apparatus according to the invention with the piston in the down position,
- Figure 2: corresponds to figure 1 and shows the pipette apparatus with the piston in the up position,
- Figure 3: corresponds to figure 1 and shows the pipette apparatus when the detachable tip is being removed,
- Figures 4-8: show different stages when the pipette apparatus of figure 1 is used for transferring the cap of a bottle,
- Figure 9: shows the Voltage as a function of time of a pressure sensor connected to the pipette apparatus of figure 1,
- Figure 10: corresponds to figure 9 showing the voltage of the pressure sensor as a function of time in checking of the detachable tip,
- Figure 11: corresponds to figure 9 showing the voltage of the pressure sensor as a function of time when the detachable tip is not in place,
- Figure 12: corresponds to figure 9 showing the voltage of the pressure sensor as a function of time in checking the tightness of the pipette body,
- Figure 13: corresponds to figure 9 showing the voltage of the pressure sensor as a function of time when the detachable tip suddenly separates from the liquid surface while pipetting,
- Figure 14: corresponds to figure 9 showing the voltage of the pressure sensor as a function of time when the detachable tip gets blocked,
- Figure 15: corresponds to figure 9 showing the voltage of the pressure sensor as a function of time when the detachable tip meets the liquid surface,
- Figure 16: corresponds to figure 15 showing the voltage of the pressure sensor as a function of time when the detachable tip meets the liquid surface, and
- Figure 17: shows schematically the control system of the pipette.

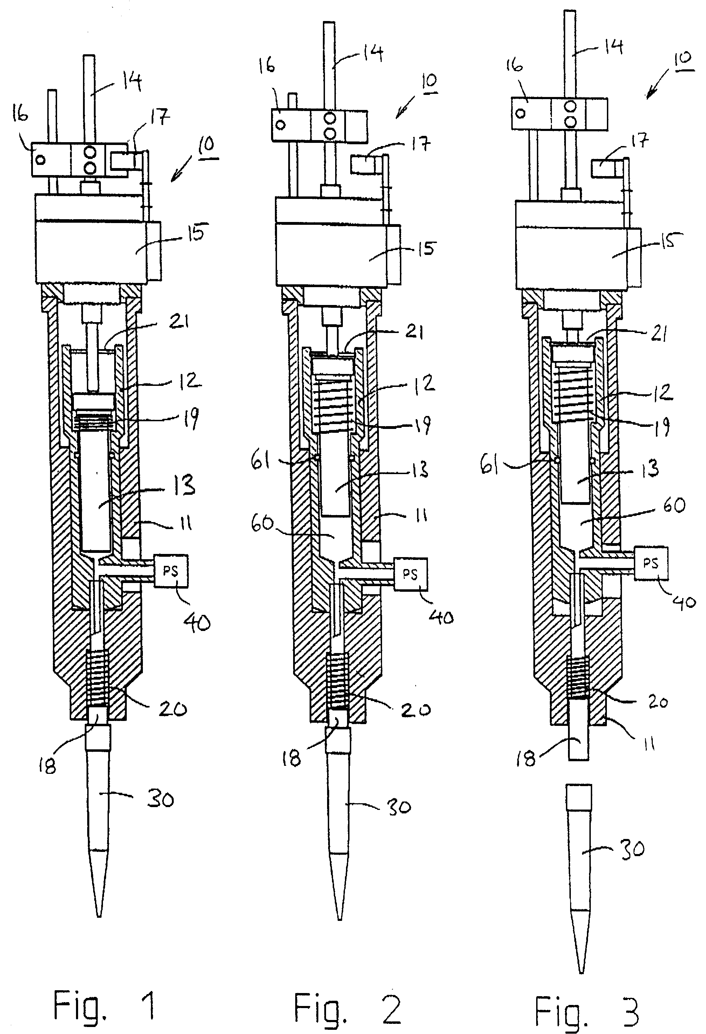

Figure 1 shows a cross-sectional view of the pipette apparatus 10 according to the invention. The principal parts of the pipette apparatus comprise a body 11, a cylindrical tube 12 inside the body and a piston 13 inside the cylinder. A shaft 14 is connected to the piston 13 and the shaft is moved by a shaft motor 15 in the direction of the axis of the cylinder 12. A rotary lock 16 prevents the shaft from rotating and the zero position or the calibration point of the piston 13 is determined by a sensor fork 17. A rod is connected to the lower part of the cylindrical tube 12 and the lower portion of the rod forms a conical rod 18 which attaches to the detachable tip 30. For monitoring the operations of the pipette apparatus, a pressure sensor 40 is connected to the liquid dispensing volume.

Since the body 11, the cylindrical tube 12 and the piston 13 are allowed to move axially relative to each other, springs 19 and 20 are placed between them. Spring 20 placed around the conical rod 18 holds the cylindrical tube 12 and, at the same time, the conical rod 18 in their down position during normal pipetting operations of the pipette 10 and prevents the tip 30 from detaching at a wrong location. Spring 19 between the the piston 13 and the cylindrical tube 12 presses the piston downwards thus removing the effect of mechanical backlash to the accuracy of dispensing. In figure 1 the piston 13 of the pipette apparatus 10 is in the down position.

Figure 2 shows the pipette apparatus 10 of figure 1 in a situation where the shaft motor 15 has moved the shaft 14 further upwards so that the piston 13 is in its up position. At the same time, the upper part of the piston 13 has moved against the locking ring 21 at the upper end of the cylindrical tube 12. The cylindrical tube 12 is, however, still in the same position as in figure 1.

Figure 3 shows the pipette apparatus 10 of figure 1 in a situation where the shaft motor 15 has moved the shaft 14 further upwards so that the piston 13 has moved outside its normal motional range. In this case the upper end of the piston 13 presses against the locking ring 21 lifting simultaneously the cylindrical tube 12 upwards. As a result, the conical rod 18, that is connected to the cylinder 12, also moves upwards inside the body 11 whereupon the detachable tip 30 joined to the conical rod 18 hits the body 11 and comes loose.

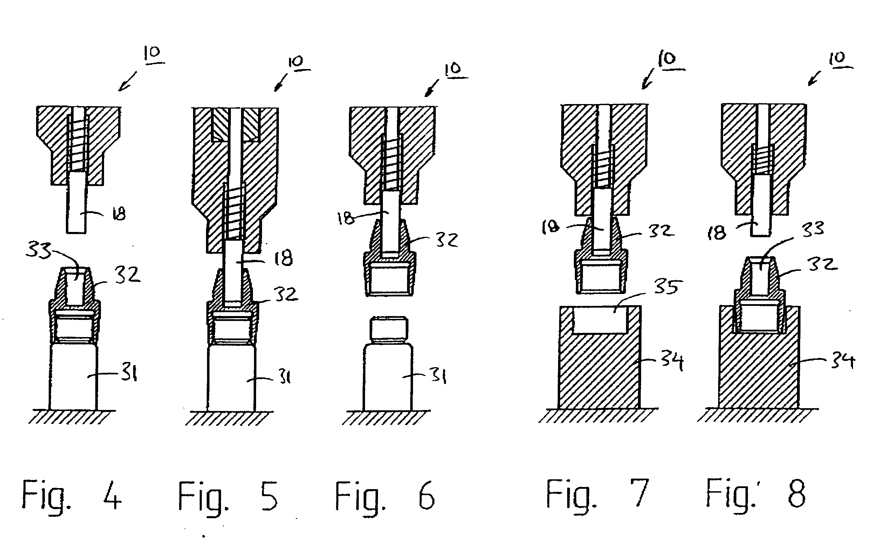

Figure 4 shows the pipette apparatus 10 above a bottle 31 and its cap 32 without the detachable tip on the conical rod 18. In the next figure 5, the conical rod 18 is pushed into a corresponding conical hollow 33 in the cap 32 of the bottle 31 so that these conical parts are interlocked. In figure 6, the pipette apparatus is lifted upwards so that the cap 32 of the bottle 31 comes along.

In figure 7 the pipette apparatus 10 has moved the cap 32 of the bottle above a recess 35 of an intermediate depot 34. In the next figure 8, the cap 32 is left to the intermediate depot 34 by loosening it from the conical rod 18 in the same way as the detachable tip 30 in figure 3.

Figure 9 shows the voltage U as a function of time t of the pressure sensor 40 connected to the pipette apparatus 10 of figure 1. The horizontal axis of the figure represents the time t and the initial situation 41 is on the lefthand corner of the figure where the voltage U of the pressure sensor, which is represented on the vertical axis, is zero. Pipetting action is started so that the tip 30 of the pipette 10 of figure 1 is lowered towards the surface of the liquid which is not shown in the figure. When the tip 30 meets the liquid surface at point 52 and is immersed in the liquid, the output voltage U of the pressure sensor 40 changes. This change in voltage can be seen in figure 9 at point 52 where the voltage U changes from its base level 41 to level 42. From the change in voltage the corresponding increase in pressure in the tip 30 of the pipette 10 is obtained.

When the piston 13 of the pipette 10 in figure 1 is moved upwards, there will develop a vacuum inside the cylinder 12 and the liquid to be pipetted is aspirated into the detachable tip 30 of the pipette 10. Vacuum appears in the figure 9 as the ascending part 43 of the voltage curve of the pressure sensor. Movement of the piston 13 stops at point 44 of the curve and then the change 53 in voltage indicates the change in pressure when the flow resistance in the tip 30 of the pipette 10 disappears. Pressure then remains at level 45. When the tip 30 is lifted from the liquid at point 54, pressure changes the same amount, but in opposite in direction, as in the situation when the tip 30 met the liquid surface at point 52.

In figure 9, the U value 46 of the pressure sensor voltage describes the situation where the piston 13 of the pipette 10 of figure 1 has stopped and the tip 30 is above the liquid surface. This pressure value corresponds to the hydrostatic preesure of the liquid column in the pipette facilitating a straightforward determination of the degree of fullness of the pipette.

When the dispensing stage is started, liquid is pushed out of the tip 30 of the pipette by moving the piston 13. Then a sudden change 55 in pressure occurs and the liquid removal from the tip 30 of the pipette 10 is seen as the descending part 47 of the voltage curve U of the pressure sensor. When the pipette 10 is again empty and motion of the piston 13 stops, the voltage U of the pressure sensor again changes suddenly at point 56, being again zero at point 48 like at the initial situation 41.

The pressure sensor 40 of the pipette 10 in figure 1 can also be used for checking various operations and testing attachment of parts and tightness of joints. Figure 10 shows one such operation which checks whether the detachable tip 30 is in place.

Checking of the detachable tip 30 is performed so that the piston 13 of an empty pipette 10 of figure 1 is moved to-and-fro. As seen in figure 10, pressure in the cylinder 12 of the pipette 10 then changes. After the initial situation 41 the piston 13 is moved upwards and the pressure sensor indicates a vacuum 49 in the cylinder 12. Correspondingly, when the piston 13 moves downwards an overpressure 50 is developed in the cylinder 12.

These changes in pressure are due to the fact that the cross-sectional area of the opening at the end of the tip 30 is smaller than that of the rest of the tip and the piston 13. This forms a choke at the end of the tip for the air flowing in and out the cylinder 12 and this flow resistance due to the choke causes the change in pressure.

In the situation shown in figure 10, the detachable tip 30 was in place attached to the cone 18 of the pipette 10. This could also be concluded from the pressure change measured by the pressure sensor as shown in the figure. Figure 11 shows a situation which corresponds to that of figure 10 except that the detachable tip 30 is not in place. Then the voltage U of the pressure sensor 40 as a function of t does not change although the piston 13 is moved to-and-fro. The reason is that there is no choking obstruction that would effect a change in pressure.

Figure 12 shows another checking which can be performed by the pressure sensor 40 even before fetching the detachable tip 30. This is the checking for the tightness of the body of the pipette 10 which is performed, for example, while transferring the cap 32 of the bottle 31. The precondition to this is of course that the joint between the conical part 18 of the pipette 10 and the cap 32 of the bottle is tight.

When the piston 13 is moved upwards in this situation, a vacuum will be created in the cylinder 12. Then it is possible to measure with the pressure sensor 40 whether the vacuum remains unchanged in the cylinder 12 of the pipette 10. From figure 12 it can be seen that, in this example, the vacuum 49 does not remain stable enough and so the body of the pipette 10 is not tight.

In a corresponding way, attachemt of the detachable tip 30 to the conical part 18 of the pipette 10 and the tightness of the joint can be tested. The detachable tip 30 is pressed tightly against some base and changes in the vacuum, that was created by moving the piston 13, are followed in the cylinder 12. Tightness of the detachable tip 30 can also determined by following the hydrostatic pressure caused by the liquid column in the tip as a function of time.

Blocking of the detachable tip 30 of the pipette 10 or its separation from the liquid can also be observed by the pressure sensor 40.

Figure 13 shows a situation where the detachable tip 30 suddenly separates from the liquid surface during pipetting. At the initial situation 41 the pressure is zero. When the piston 13 of the pipette 10 is moved upwards, vacuum is generated in the cylinder 12 of the pipette 10 and the liquid is drawn into the cylinder 12 of the pipette 10. The vacuum shows in figure 9 as the ascending part 43 in the voltage curve of the pressure sensor. When the detachable tip 30 suddenly separates from the liquid surface during pipetting, the pressure will suddenly change. Then the pipette 10 seems to bubble because air flows into the tip 30 during the suction stage. This phenomenom shows at point 51 in the voltage curve of the pressure sensor 40, at which point there is as an indefinite change in pressure.

Economical use of liquid is the goal in pipetting liquids. Therefore, the liquid in the container should be utilized as accurately as possible to minimize the amount of unused liquid remaining in the container. This requires that pipetting should be done as close to the bottom as possible. If the tip 30 of the pipette 10 touches the bottom it may, however, cause a partial or complete blocking of the opening of the tip. The subsequent disturbance can be seen as a sudden increase in the pressure of the pressure sensor 40.

Figure 14 shows a situation where the tip 30 of the pipette 10 gets blocked. At the initial situation 41 the pressure is zero. When the piston 13 of the pipette 10 is moved upwards, vacuum is generated in the cylinder 12 of the pipette 10 and the liquid is aspirated into the cylinder 12 of the pipette 10.The vacuum can be seen in figure 9 as the ascending part 43 in the voltage curve of the pressure sensor. When the detachable tip 30 gets blocked during pipetting, the pressure will suddenly change at point 52.

Meeting between the tip 30 of the pipette 10 and the liquid surface can also be detected by means of the pressure sensor 40. It can be done by moving the piston 13 to-and-fro i.e. in a similar way as in figure 10 when attachment of the tip 30 to the pipette 10 was checked. Meeting of the liquid surface is, however, detected clearly beacause liquid flow through the opening of the tip causes a much larger pressure difference than air flow through the opening.

Figure 15 shows a situation where the tip 30 of the pipette 10 moves towards the liquid surface and, at the same time the piston 13 of the pipette 10 also moves downwards. At the initial situation 41 the voltage U of the pressure sensor 40 is so small that it can be considered to be zero in this measurement. When the tip 30 meets the liquid surface, there is a sudden increase 50 in pressure.

If, on the other hand, the piston 13 of the pipette 10 moves upwards, when the tip 30 of the pipette 10 meets the liquid surface, a situation shown in figure 16 occurs. The pressure sensor 40 indicates a sudden vacuum 43, which corresponds to the suction stage of the pipette 10.

Change in the tightness of the pipette 10 can also be due to wearing of the moving parts of the pipette. Such a part which is liable to wear is the ring 61 of the piston 13, for example, the ring providing the seal between the piston 13 and the cylinder 12. Then, the pressure sensor 40 connected to the air space of the pipette 10 tells if the tightness of the pipette changes during pipetting operation in which case the pipette must be checked or replaced.

Figure 17 shows schematically the control system of the pipette 10. In the pipetting apparatus 10, the control unit 65 controls the motor 15 so that it moves the piston 13 inside the pipette in both directions according to control instructions. The piston adjusts the liquid volume in the tip 30 and, therefore the dispensing. The spring 19 keeps the piston 13 in contact with the shaft of the motor thus removing the effect of mechanical backlash. A stepper motor is preferably used as the electric motor 15 whereby quick and accurate movements of the piston are obtained without any separate brakes or any other transmission means.

The pressure sensor 40 connected to the air volume 66 of the pipette 10 continuously gives the control unit 65 the air pressure inside the pipette. The received pressure value can be utilized in many different ways. It tells, for example, the degree of fullness of the tip 30 of the pipette 10 and informs the control unit 65 about various possible malfunctions of the pipette 10. The pipetting apparatus 10 can be controlled so that the pressure sensor 40 gives the alarm on disturbances but the pressure sensor 40 can also be arranged to control the whole process in real time.

It is obvious to those skilled in the field that different embodiments of the invention can vary within the limits of the enclosed claims.

## Claims

1. Method employed in a pipette apparatus (10) operating on the air-piston principle wherein the liquid to be dispensed is not in contact with the piston (13) of the pipette but the liquid to be dispensed is moved by an air space (60) between the piston and the liquid, **characterized** in that operation of the pipette (10) is monitored and/or controlled on the basis of the air pressure measured by a pressure sensor (40) connected to the air space (60) of the pipette.

2. Method according to claim 1, **characterized** in that, on the basis of the air pressure measured by the pressure sensor (40) connected to the air space (60) of the pipette (10), at least one or more of the following checkings are performed before pipetting:
- tightness of the body (12, 13, 61) of the pipette,
- checking of the attachement of the tip (30),
- tightness of the joint of the tip.

3. Method according to claim 1 or 2, **characterized** in that, on the basis of the air pressure measured by the pressure sensor (40) connected to the air space (60) of the pipette (10), at least one or more of the following things are observed during a pipetting operation:
- meeting of the liquid surface when the tip (30) is moving downwards,
- meeting of the liquid surface when the tip (30) is moving upwards,
- degree of fullness of the pipette

4. Method according to claim 1, 2 or 3, **characterized** in that, on the basis of the air pressure measured by the pressure sensor (40) connected to the air space (60) of the pipette (10), at least one or more of the following malfunctions are observed during a pipetting operation:
- separation of the tip (30) of the pipette from the liquid during a pipetting operation,
- blocking of the tip of the pipette,
- determination of the need for replacement of the tip during the run
- loosening of the tip from the pipette.

5. Pipette apparatus (10) operating on the air-piston principle, wherein the liquid to be dispensed is not in contact with the piston (13) of the pipette but there is an air space (60) between the liquid and the piston, **characterized** in that a pressure sensor (40) is connected to the air space of the pipette (10).

6. Pipette apparatus (10) according to claim 5, **characterized** in that the pressure sensor (40) is connected to a cylindrical tube (12) of the pipette (10) so that it measures the air pressure in the cylinder of the pipette.

7. Pipette apparatus (10) according to claim 5 or 6, **characterized** in that the cylindrical tube (12), to which the pressure sensor (40) is connected, is movable by means of a motor (15).

8. Pipette apparatus (10) according to claim 5, 6 or 7, **characterized** in that the pipette apparatus (10) is provided with a control unit (65) co-operating with the pressure sensor (40), which control unit registers pressure changes in the air space of the pipette and functions as an alarm unit in case of a malfunction.

9. Pipette apparatus (10) according to any of claims 5-8, **characterized** in that the pipette apparatus (10) is provided with a control unit (65) co-operating with the pressure sensor (40), which control unit controls the operation of the pipette apparatus on the basis of changes in the air space of the pipette.
